(19) Europäisches Patentamt
European Patent Office
Office européen des brevets

(11) **EP 3 144 898 A1**

(12) **EUROPEAN PATENT APPLICATION**

(43) Date of publication:
**22.03.2017 Bulletin 2017/12**

(51) Int Cl.:
*G06T 15/50* (2011.01)    *G06T 7/00* (2017.01)

(21) Application number: **15306454.8**

(22) Date of filing: **17.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **ROBERT, Philippe**
**35576 Cesson-Sévigné (FR)**
• **JIDDI, Salma**
**35576 Cesson-Sévigné (FR)**
• **HUDON, Matis**
**35576 Cesson-Sévigné (FR)**

(74) Representative: **Huchet, Anne**
**TECHNICOLOR**
**1-5, rue Jeanne d'Arc**
**92130 Issy-les-Moulineaux (FR)**

(54) **METHOD AND SYSTEM FOR DETERMINATION OF INTRINSIC IMAGES FROM TWO DIMENSIONAL IMAGES IN A VIDEO SEQUENCE**

(57)    A method and system for three dimensional presentation of two dimensional images in a video sequence having a plurality of frames is provided. In one embodiment, the method comprises identifying a plurality of points to be presented in three dimensional images and performing a color and depth sequence analysis for each of these points. A profile is then generated for each of the points based on the analysis. The profiles are classified as variable profiles or constant profiles and a surface reflectance is calculated for each of the points having a constant profile. The method also comprises modifying the two dimensional images to be presented as three dimensional images for points having a constant profile, wherein the images maintain uniform color and appearance between adjacent frames along said video sequence.

**Figure 4**

**Description**

**TECHNICAL FIELD**

The present disclosure relates generally to three dimensional video imaging and more particularly to three dimensional video imaging incorporating reflectance parameter estimations using an RGB-D sequence.

**BACKGROUND**

In digital applications, including virtual reality and augmented reality applications, it is difficult to create the illusion of three dimensional shapes using only two dimensional contours comprised of lines for a variety of reasons. Creation of three dimensional shapes depends on accurate duplication of shading and reproduction of color intensity of real life objects. Distinguishing accurate color hues and characteristics to enable the process of duplicating them greatly depends on two factors. The first factor has to do with understanding illumination of objects by light sources, and the second factor has to do with the capacity of human eye in distinguishing hues appropriately under different conditions. Intrinsic image decomposition to create three dimensional objects that seem realistic aims to separate an image into its reflectance and shading components. The reflectance component contains the intrinsic color, or albedo, of surface points independent of the illumination environment. On the other hand, the shading component consists of various lighting effects including shadows.

One technique used to reproduce three dimensional shapes based on location and shading of objects is called imaging. Imaging is the process that maps light intensities from points in a scene onto an image plane. The points that define a plane can be plotted and represent the location of a plane but they do not define the contours that give a three dimensional effect to an object. The latter is determined by the image intensity or image irradiance. The image irradiance of a point in the image plane is defined as power per unit area of radiant energy, falling on an image plane. Radiance is defined as the outgoing energy while the irradiance is defined as an incoming energy. Reflectance of the surface of a material is its effectiveness in reflecting radiant energy. It is the fraction of incident electromagnetic power that is reflected at an interface. The reflectance spectrum or spectral reflectance curve is the plot of the reflectance as a function of its wavelength.

Colors containing only one wavelength are called pure colors or spectral colors. Many color displays such as those used in mobile devices, computer monitors and television sets cannot reproduce all colors discernible by a human eye. Colors outside the spectral range, can only be approximated in many cases due to device limitations. This makes application of imaging techniques a challenging task. The problem of estimating reflectance parameters and light source location in a virtual reality or augmented reality application is particularly difficult because the location and characteristic of the light source reflecting from different objects in a scene has to be estimated each time. In addition, diffuse and specular reflectance properties of surfaces in the scene has to also be calculated. Consequently techniques that allow for realistic presentation of images in three dimensions are desired.

SUMMARY

A method and system for three dimensional presentation of two dimensional images in a video sequence having a plurality of frames is provided. In one embodiment, the method comprises identifying a plurality of points to be presented in three dimensional images and performing a color and depth sequence analysis for each of these points. A profile is then generated profiles for each of the points based on the analysis. The profiles are classified as variable profiles or constant profiles and a surface reflectance is calculated for each of the points having a constant profile. Method also comprises modifying the two dimensional images to present as three dimensional images for points having a constant profile, wherein the images maintain uniform color and appearance between adjacent frames along the video sequence.

In another embodiment a system for three dimensional presentation of two dimensional images in a video sequence having a plurality of frames is provided. The system comprises a camera for generating a video sequence having a plurality of frames along the sequence, a sensor associated with said camera to capture each of the frames along the sequence from a plurality of angles and a processor in communication with the camera and the sensor. The processor is configured to identify a plurality of points associated with each frame for points that are associated with three dimensional images. The processor performs a color and depth sequence analysis for each points and generates profiles based on this. At least one of the points is created virtually. The processor also classifies the profiles as variable profiles or constant profiles. A surface reflectance is generated for each of points with a constant profile. The processor also modifies two dimensional images to be presented as three dimensional images for associated points having a constant profile such that the images maintain uniform color and appearance between adjacent frames in said video sequence.

In another embodiment, a system for three dimensional presentation of two dimensional images in a video sequence having a plurality of frames is provided. The system comprises means for generating a video sequence having a plurality of frames along the sequence, wherein said frames along said sequence include a plurality of viewpoints from a plurality of angles. The system also comprises means for identifying a plurality of points associated with each frame wherein each point is associated with the to be presented three dimensional image. The system also comprises means for performing a color and depth sequence analysis for each of these points and means for generating profiles based on the analysis. The systems also comprises means for classifying the profiles as variable or constant profiles and means for calculating a surface reflectance for each of the points having a constant profile. In addition, the system comprises means for modifying the two dimensional images to be presented as three dimensional images for points having a constant profile, wherein that these images maintain uniform color and appearance between adjacent frames along the video sequence.

Additional features and advantages are realized through the techniques of the present invention. Other embodiments and aspects of the invention are described in detail herein and are considered as part of the claimed invention. For a better understanding of the invention with advantages and features, refer to the description and to the drawings.

**BRIEF DESCRIPTION OF THE DRAWINGS**

The invention will be better understood and illustrated by means of the following embodiment and execution examples, in no way limitative, with reference to the appended figures on which:

Figure 1 is a graphical depiction of a light ray distribution associated with particular point disposed on a surface of a scene according to one embodiment;

Figure 2 is a graphical depiction of the same particular point as in Figure 1 further illustrating its associated vector components in three dimensions according to one embodiment;

Figure 3 is a block diagram illustrating real and virtual objects in a particular scene according to one embodiment;

Figure 4, is a flow chart depiction for providing presentation of three dimensional objects according to one embodiment;

Figure 5 is a flow chart depiction of embodiment of Figure 4 further considering location of light sources;

Figure 6 is flow chart depiction illustrating diffuse reflectance recovery for points with diffuse constant profiles according to one embodiment; and

Figure 7 is a flow chart depiction illustrating diffuse reflectance recovery for points with diffuse constant profiles according to an alternate embodiment.

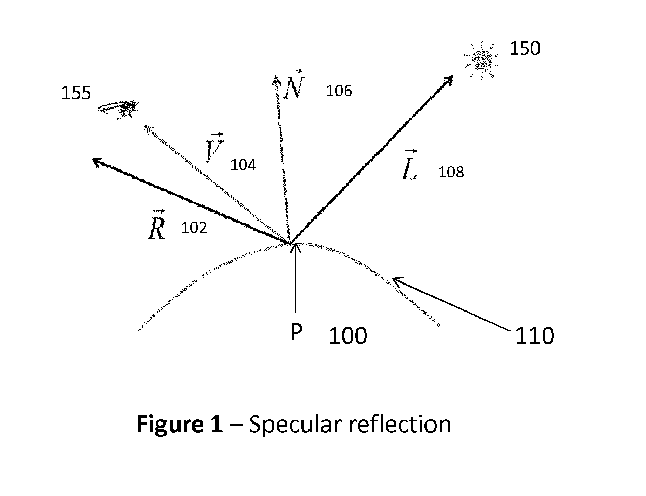

In Figures 1-7, the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

**DESCRIPTION**

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications.

Figure 1 is a graphical depiction of a light ray distribution of a surface shown by reference numerals 110. A particular point P is disposed on the surface 110. In this embodiment, the point P is distinguished by reference numeral 100. The surface point P 100 can be described by the normalized vectors $\vec{N}, \vec{L}, \vec{R}, \vec{V}$. The vectors $\vec{N}, \vec{L}, \vec{R}, \vec{V}$ can be defined respectively as the surface normal 106, the direction of a light source 108, the direction that a perfectly reflected ray of light would take from this point on the surface 102, and the direction of the light as pointing towards the sensor 104. In addition, the light source is shown by reference numeral 150 and the viewing reference point by numeral 155.

In this embodiment, the surface point P (100), is part of an object whose image is captured in two dimensions. The point may be a real point, such as captured by a camera, or a virtual point created in mixed, an augmented or virtual reality system. The point may also be part of a scene or frame along a video sequence.

In this embodiment, the scene or frame will be presented in three dimensions (hereinafter 3D). Therefore, appropriate color variation and overall shading will be added or enhanced to features that enhance the illusion of three dimensionality of the scene. To this end, intrinsic image decomposition aims to separate the image of each object containing point P 100 into its reflectance and shading components. The reflectance component R contains the intrinsic color, or albedo, of surface point P 100 independent of the illumination environment. On the other hand, the shading component S consists of various lighting effects including shadows that have to be added to the object's image to provide the three dimensional effects. The relationship between the reflectance component R and shading S for an image I can be defined as:

$$I^p = R^p . S^p$$

where p denotes the point in the image space, as discussed.

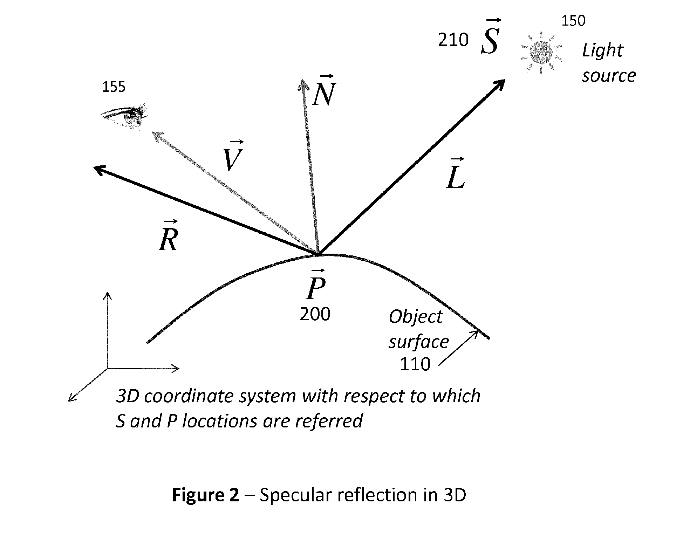

Figure 2 is a graphic depiction of the same point P (100) as shown in the embodiment of Figure 1, but in Figure 2 directional vectors S and P and their directions, as shown in a three dimensional coordinate, is also provided. Vector $\vec{S}$ as shown by numerals 210 describe the 3D position of the light source S, and can be used to describe its shading component. Vector P 200, describes the coordinates of a particular 3D point P. Vector P 200 is intentionally shown by reference numerals 200 instead of 100 to reflect the change (from a point to a vector). Similar to Figure 1, vector $\vec{L}$ (P) describes the light direction vector with respect to the point P (100), while vector $\vec{N}$ (P) describes the normal vector of the point P (100). Vector $\vec{V}$ (P) describes the viewpoint vector of a point P (100) and Vector R (P) describes the mirror reflection vector of the light source with respect to a point P. Mathematically, the relationship between the particular vectors shown in Figure 2, can be presented as $\vec{R} = 2(\vec{L}.\vec{N})\vec{N} - \vec{L}$ or by equation (1):

$$(1) \qquad \vec{R}(P) = 2.(\vec{L}(P).\vec{N}(P)).\vec{N}(P) - \vec{L}(P)$$

Vector R is of particular interest because in addition to challenges of creating three dimensional images, distinguishing between diffuse and specular effects on surfaces are difficult due to device limitations. A specular reflection is a phenomenon in which human eye sees an illuminated shiny surface. To this end, the eye observes a highlight or bright spot at certain viewing directions. Diffuse reflections by contrast occur when incoming light is reflected in a broad range of direction. An example of the distinction between specular and diffuse reflection would be glossy and matte paints. Matte paints have almost exclusively diffuse reflection, while glossy paints have both specular and diffuse reflection. A polished metallic objects, such as a mirror (silver or aluminum) can reflect light very efficiently whereas solid non-metallic surfaces such as concrete walls usually have mostly diffuse reflections. In surfaces with specular reflections, there is a mirror like reflection of light or from the surface. In such a case, the light emanates from a single incoming direction (a ray) and is reflected into a single outgoing direction. Such behavior is described by the law of reflection, which states that the direction of incoming light (the incident ray), and the direction of outgoing light reflected (the reflected ray) make the same angle with respect to the surface normal.

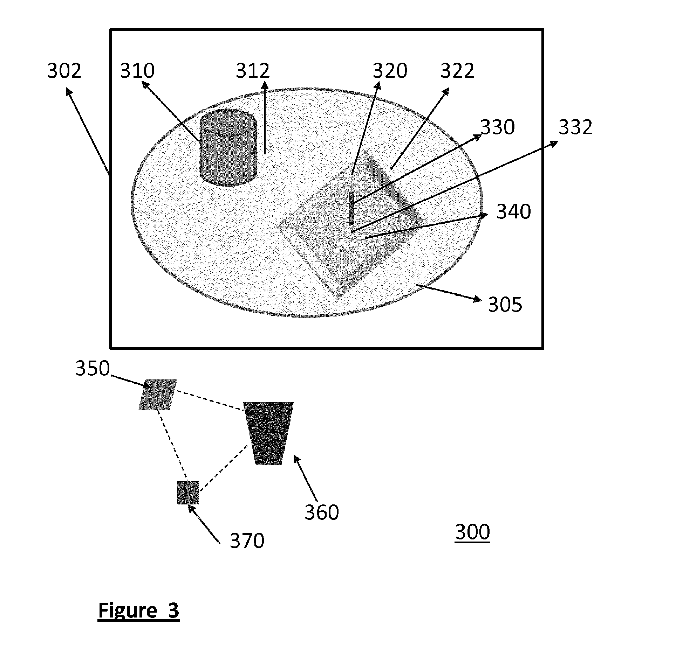

Consequently, in any application that is to provide a realistic three dimensional depiction of an object, even with diffuse components, the presence of probable specular reflections must be considered. In addition, any estimation of intrinsic image sequences for any scene or sequence of scenes such as presented in a video stream has to take into account both the color hue and the depth of color (hereinafter RGB-D) to produce realistic images. Sometimes a temporal filtering may be used to implicitly isolate the diffuse components from the specular ones but when using displays, specular shading effects merge with shadows, not allowing adequate visual separations for the human eye to decipher the difference. Therefore, a better identification and analysis of specular effects is required. Such analysis has to be provided regardless of whether the point is real or created virtually. The diffuse and specular calculations have to be estimated accurately in either case to provide a superior and realistic presentation of a frame or scene. To aid understanding, an example can be discussed in conjunction with the embodiment presented in Figure 3.

In Figure 3, a block diagram illustration of a system 300 is provided according to one embodiment. The system 300 comprises a camera 360 associated with a sensor 350, which are both in communication with a processor 370. The processor 370 can be free standing or a part of the camera 360 or sensor 350. In one embodiment, the camera 360, sensor 350 and processor 370 may all be part of one integral device.

A particular scene or frame along a sequence of frames in a video image capture, is shown in Figure 3 by reference numerals 302. In this example, the scene or frame 302 comprises the picture of a table top 305. The table top contains two real objects, a cup referenced by numeral 310 and a book referenced by numeral 320. Each of these objects have a corresponding shadow due to being illuminated by a light source (not shown). The shadow for the cup 310 is shown by reference numerals 312 and that for the book is shown by reference numerals 322. There is also a third object, a glue stick shown by reference numerals 330 which also has a corresponding shadow 332. In this example, the glue stick is a virtual object and is disposed on top of the book 320. It is assumed that the book has specular qualities and so the light from the light source (not shown) is reflected in the book and shown as reflected area associated with reference numeral 340.

To aid understanding, it is considered that the book 320 is blue generally and different hues and intensities of blue or other colors render the book its three dimensional appearance. In this example, all shadows are considered to appear as gray, except the shadow associated with the glue stick 330 as will be discussed. The reflection area 340 is white. To obtain the correct color result, it is necessary to understand that the white patch on the book 340 is due to the specular effect of the light source on the book. In the absence of this effect the color of this area is blue as discussed. The glue stick 330 is black, however, the shadow cast by the glue stick 332, is neither white nor gray. Taking the book and its specular effect into consideration, the shadow emanating from the glue stick 330 has a shade of blue. This would have been the case if a real image of the glue stick was captured by a camera. The correct estimation of the color and shading has to be made for virtual images without physical confirmation of a real image.

In Figure 3, point P 100 (or 200) as discussed in Figures 1 and 2 can be disposed anywhere in scene 302 and be part of any of the real or virtual objects of Figure 3. When Figure 3 is part of a sequence of frames, such as a video capture, each frame must present consistent information as relating to illuminance and hue with respect to any surface point such as point P (100) discussed in Figures 1 and 2, along a sequence. Therefore consistency must be maintained for all objects in any adjacent frames along this sequence. To this end, applying the concepts of Figures 1 and 2 to practical considerations of Figure 3, the diffuse or specular calculations have to be estimated accurately, whether for a real object or a virtual object.

Different formula can be used in different examples to provide the estimations. In a first case, in order to describe the way a surface reflects light as a combination of the diffuse reflection of rough surfaces and the specular reflection of shiny surfaces the following formula can be used:

$$I^p = k_a i_a + \sum_m \left( k_d \left( \vec{L}_m . \vec{N} \right) i_{m,d} \right) + \sum_m \left( k_s \left( \vec{R}_m . \vec{V} \right)^\alpha i_{m,s} \right)$$

In the above formula, the first component of the addition on the right side relates to an ambient lighting, wherein the second component refers to a diffuse lighting (the sum on m is applied to the number of light sources) and the third component refers to a specular lighting. The parameters $k_a$, $k_d$ and $k_s$ are respectively defined as ambient reflection, diffuse (albedo) reflection and specular reflection coefficients. Parameter $\alpha$ refers to the width of the reflection lobe (the specular effect is more or less spread). It can be also defined as a measure of the reflection or "shininess" of a surface such that a larger value will indicate a higher reflection or a more mirror-like quality. The $K_s$ value also indicates the level of specular reflection. In order to provide a realistic model, the reflectance parameters of the object surfaces as well as the lighting sources have to be first estimated. Light sources are often identified via the direct observation of the light sources such as from a camera. It is also important to capture the scene (when real) or consider the scene or frame (when virtual) from different angles to estimate different results due to the effect of light sources and geometries. Ambient lighting must also be considered. The following formula reflects other formula already discussed but with the ambient lighting also being considered:

$$I^p = \sum_m \left( k_d \left( \vec{L}_m . \vec{N} \right) i_{m,d} \right) + k_s \left( \vec{R} . \vec{V} \right)^\alpha i_s$$

The equation above assumes that image color of P results from a sum of m diffuse effects and one specular effect. Therefore, this can be used to derive:

$$E = \sum_{P} \left( I^{p} - \sum_{m} \left( k_{d} \left( \vec{L}_{m}.\vec{N} \right) i_{m,d} \right) + k_{s} \left( \vec{R}.\vec{V} \right)^{\alpha} i_{s} \right)^{2}$$

The above equation provides for a square error that is summed over all the pixels of a given object, between the pixel intensity and the decomposition. Theoretically, using this calculation, for each segment cluster the diffuse and specular parameters can be computed. However , in real applications an object in a scene can have the same color intensity, without all its parts having the same behavior towards a specular lighting (e.g. sphere with metal and cotton materials).

Some prior art applications have tried to determine the reflectance parameters and the illumination distribution from a set of images to resolve such issues. In such cases, each image is aligned with a three dimensional model. Each image will then have to be decomposed into two images as with regards to the reflectance components and based on the intensity variation of object surface points. It is possible to then generate a reflectance profile for each point but only the profiles that show an impact of the view-dependent reflection (specular reflection) can be processed. The profiles with no significant variation as far as the intensity is concerned are therefore left unprocessed.

Taking these mathematical calculations and shortcomings into consideration, it is possible to estimate diffuse and specular surface reflectance from a RGB image sequence with known geometry. In one embodiment, the geometry can be estimated previously. In a different embodiment, the geometry can be captured on-line as a depth map together with the RGB frame via a RGB+depth sensor (e.g. Kinect sensor). In one example, the three dimensional (hereinafter 3D) scene is static. The RGBD sensor can be moving around the scene, so the scene is observed under various view angles. A set of RGB and depth frames can then be acquired along this trajectory. Camera pose, with respect to a given coordinate system attached to the scene, can then become for each frame. In this embodiment, from the 3D geometry, surface normal(s) can be computed and any occlusion of a surface by an object from a given 3D viewpoint can then be estimated. Consequently, given a particular point of a surface in this scene, the corresponding image point in the frames of the video sequence can be located and be classified accordingly as visible, occluded or out of field. Therefore, considering a frame of the input video sequence, it is possible to estimate a color profile of each pixel (as long as the point is visible from the particular viewpoint). A profile can then be generated in one embodiment. This profile includes a triple curve that also describes the evolution of the color for a corresponding 3D point for the scene given a set of viewpoints. A particular curve can then be selected for each pixel. The curve can have a variety of specifics. In one embodiment, for example, the curve can correspond to the sum of the three color components that may be weighted according to one of the common formula used to convert color to luminance as can be appreciated by those skilled in the art.

Applying some of the calculations discussed above, in one embodiment, the profile can be described by equation (2):

$$(2) \qquad I^{P}(t) = I_{d}^{p} + \sum_{m} \left( k_{S}^{P} \left( \vec{R}_{m}^{P}.\vec{V}_{P}(t) \right)^{\alpha_{P}} O_{m}^{P}.i_{m}^{S} \right)$$

In this case, the variable 't' still refers to the image index and static ambient and diffuse components are similarly grouped in the parameter $I_{d}^{p}$. In the specular component, parameters $k_{S}^{P}$ and $\alpha_{P}$ are peculiar to point P and temporally constant. $O_{m}^{P}$ is the occlusion parameter and is equal to 1 if light source m is visible from point P, and 0 otherwise. Vector $\vec{R}_{m}^{P}$ is the mirror reflection vector, peculiar to both point P and light source m. Only $\vec{V}_{P}(t)$, the viewpoint vector of 3D point P at frame 't', can vary along the sequence. Therefore, the changes in the profile refer to the changes in specular effects. In one embodiment, if the 3D point is not observed in view 't' the value is set to 'undetermined' and is not processed.

In order to estimate the reflectance parameters of the 3D points of the scene observed through the pixels of the reference image and the other registered images, their intensity profiles need to be examined. Viewpoints of different scenes must be varied in order to provide sufficient information required for rendering this estimation.

In such a case if the profile is variable, the point is bound to belong to a specular surface. On the other hand, the profile can be constant because the point mat be purely a diffuse point (with no specular effect in spite of light sources that would create such effect if the surface was glossy); or the point may not be submitted to specular effects (no light source that could create specular effect along the camera trajectory or presence of an object occluding these light sources); or the point may have specular effects all along its sequence (due for example to a short trajectory and a wide light source). Taking this into consideration, a specular estimation pipeline can be provided that can analyze the RGB sequence with its measured geometry in order to estimate specular reflectance parameters of an observed 3D scene as well as the characteristics of the light sources responsible of specular effects. In one embodiment, this technique can then be applied to a number of applications in virtual reality, augmented or mixed reality.

In one example, the video analysis of a scene is examined in order to estimate diffuse and specular reflectance of the observed surfaces as well as light sources of specular reflections in the scene. As in the previous example, the scene represents a stationary scene with an image sequence acquisition from a video camera moving around or into the scene. Geometry of the scene can be calculated or known a priori or even measured on-line and can be given by a RGB-depth sensor.

In other examples, additional devices such as a light probe or a wide-angle camera are placed into the scene in order to acquire the light sources and the environment map. Yet in other examples, intrinsic image decomposition estimates diffuse surface reflectance and shading without the estimation of the light sources. This considerably limits the application area. Therefore, for many applications, it is necessary to estimate both the light sources characteristics and both diffuse and specular reflectance properties of the object surfaces.

In each situation, the estimation of the surface reflectance properties (diffuse and specular) of the objects in the scene has to be calculated. At the same time, the characteristics of the light sources that create specular effects, from a video and depth sequence needs to also be computed (without any additional sensors). A profile can then be generated as discussed and associated with each and every different situation so that a repeatable process can be established. Creating a profile for different points will greatly help in the generation of three dimensional images. In order to create this profile, in one embodiment, a first in pixel-based image registration from which profiles of 3D scene point image intensities are estimated over a sequence.

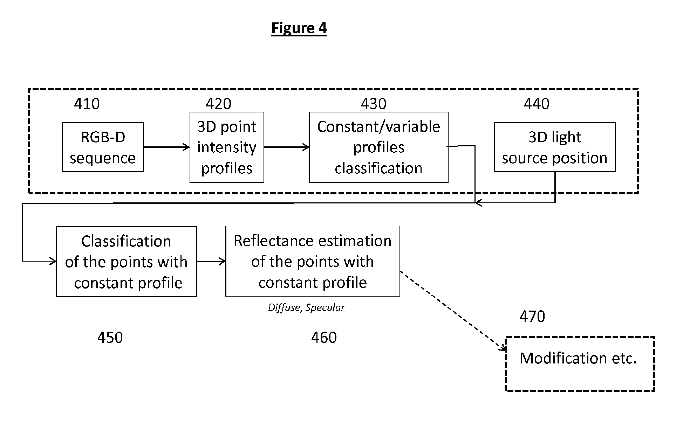

In one embodiment, 3D points which have a constant intensity evolution throughout the registered sequence can be processed separately. These can be distinguished from those ones that have a variable profile and their reflectance components can be estimated by examining their intensity profile. The flowchart of Figure 4, will provide a technique to enable the latter.

In Figure 4, a flow chart depiction according to one embodiment is provided. In step 410, an RGB sequence analysis is performed with measured geometry. The analysis can be used to estimate specular reflectance parameters of an observed 3D scene as well as the characteristics of the light sources responsible for the specular effects. This will allow applications of real, mixed, augmented or virtual reality (as discussed) such as in embodiments including that in connection with the example of Figure 3. One challenge in the estimation of the surface reflectance properties (diffuse and specular) at all 3D points observed in a scene is that for the points that do not exhibit variable profiles. Consequently, the RGB sequence analysis (with measured geometry) can be performed in such cases in order to detect and classify 3D points which are never or conversely are always being continuously impacted by specular light sources. The estimation of the diffuse and specular reflectance parameters in these areas allow the development of applications in video editing, as well as augmented or mixed reality as discussed such that re-lighting, removing an object or inserting a virtual object in a 3D real scene will be done in a more realistic manner.

Referring back to Figure 4, in step 420, a profile is generated and attached to a 3D point, the profile also associates the point or object to a set of pixels that display its intensity in the registered video sequence. In one embodiment, pixel-based image registration is conducted from which profiles of 3D scene points image intensities over the sequence are estimated. The profile is attached to a 3D point and to the set of pixels that display its intensity in the registered sequence.

In a next step, as shown by reference numerals 430, a distinction is made between variable (intensity) profiles that reveal specular effects and constant (intensity) profiles that show diffuse reflections or constant specular effects. Then, for each variable profile diffuse reflectance is estimated and subtracted from the intensity profile to deduce the specular profile. In the next step, shown at 440 the information about the 3D position of the light sources that create the specular effects are provided. In step 450, the specular parameters are estimated for each observed 3D point as shown by reference numerals. In one embodiment, the location of each light source responsible for the specular effects is estimated. Finally, these parameters are iteratively refined.

Estimating reflectance parameters and light source location from specular reflections can be established based on a 3D point observed all along the video sequence. In one embodiment, the 3D point exhibits a variable profile of image intensity along this video sequence. From these variable profiles, diffuse and specular components are separated, and then specular parameters and light source location are estimated if not known. It is especially important to know the location of each light source (real or virtual), especially those associated or responsible for creating the specular effects (particularly in a video). If the location is not already known, then an attempt to estimate it can be made by processing either the input (RGB+depth sequence) or the image data as provided by a secondary sensor (e.g. wide angle camera, using a light probe.) In step 430, the constant and variable profiles are classified.

The above tasks can be accomplished in a number of ways. In one embodiment, reflectance parameters and specular light source characteristics of at least one light source in a scene using an RGBD sequence is obtained for determining the intensity profiles for a plurality of locations in the scene before the constant intensity profiles are separated from the variable intensity profiles. The diffuse component can be estimated using the variable intensity profiles so that the specular reflection parameters can be obtained. In addition, the position of at least one light source is estimated using the derived specular parameters of the scene. Then for each pixel of the intensity profile a number of frames in which intensity information is missing is calculated. A filter is then applied and a threshold value is set, in one embodiment, to determine if an intensity profile is a variable profile or a constant profile.

In step 450, the focus can shift to the 3D points that show constant profiles. In step 460, the reflectance estimation of the points are made that are classified with the constant profile. In step 470 additional steps can be made, such as those including modification of the two dimensional images to present as three dimensional images for points having a constant profile such that the "to be presented" images maintain uniform color and appearance between adjacent frames or scenes along the video sequence.

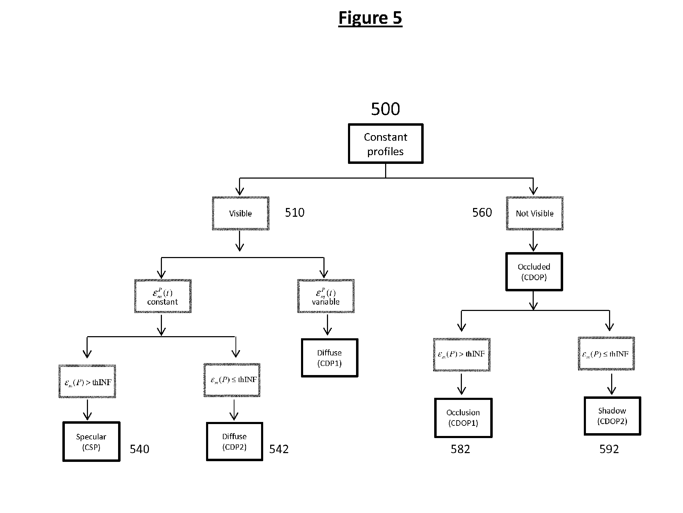

Taking the figures together, given the particular point P (100)of a surface (110) in a two dimensional scene, the corresponding image point in the frames of a video sequence can be located and it can be classified as visible, occluded or out of field. Using the embodiment of Figure 5, considering a frame of the input video sequence, it is possible to estimate a color profile of each pixel (as long as the point is visible from the viewpoint). The profile, in one embodiment, can be a triple curve that describes the evolution of the color of the corresponding 3D point in the scene through the set of viewpoints. A particular curve can be selected for each pixel (it can be the 'green' curve or it can correspond to the sum of the 3 color components possibly weighted according to one of the common formula used to convert color to luminance).

Referring back to Figure 4 and combining it with the calculations and elements discussed, some information can be used in establishing such profiles. In one embodiment, the profile constancy of a given 3D point can be explained by various causes as summarized below: a)there is no specular effect if the 3D point can belong to a purely diffuse surface ( $k_S = 0$ ); b) there is also no specular effect if the 3D point is not visible from the specular light source m because an object occludes it $\left( O_m^P = 0 \right)$; c) there is no specular effects if the trajectory of the camera with respect to point P and to the light sources can be such that mirror reflection vector $\vec{R}_m^P$ (attached to point P and light source m) and viewpoint vectors have "quite" different directions $\left( \vec{R}_m^P . \vec{V}_P(t) \right)^{\alpha_P}$ is always equal or close to 0); and d) the 3D point can have a constant specular effect all along the sequence if the conditions are such that $k_S \neq 0$, $O_m^P = 1$ and

$$\left( \vec{R}_m^P . \vec{V}_P(t) \right)^{\alpha_P} \neq 0 .$$

To aid understanding of the pipeline of Figures 2 to 5, in this example, the presence of only one light source in the scene is assumed (the other light sources are supposed to contribute to ambient lighting, shadows and specular effects are only due to the unique light source). The classification criteria does not change in case of more than one light source (one only needs to apply thresholding for each source). In addition, the 3D position of the specular light source is supposed to be known, previously estimated using a light probe, a fisheye camera or any other estimation method such as known to those skilled in the art. In the context of unique specular light source m, in one embodiment, the relationships used in establishing the profile can be modified and combined in the following fashion in equation (3) below: :

$$I^P(t) = I_d^p + I_s^p = I_{d,a}^P + O_m^P.I_{d,m}^P + O_m^P.I_{s,m}^P = I_{d,a}^p + O_m^P.I_{d,m}^P + k_S^P \left( \vec{R}_m^P . \vec{V}_P(t) \right)^{\alpha_P} O_m^P.i_m^S$$

The diffuse component due to light source m, is defined by $I_{d,m}^P$ , and is distinguished from diffuse component resulting from all the other light sources, $I_{d,a}^p$ . Based on different data observations, the three constant profiles can be divided, in one embodiment into three categories:

In the first category, the constant diffuse points (CDP) where the 3D points are lit by all light sources *including* m ( $O_m^P = 1$ ), with no specular reflectance ( $k_S = 0$ ); such that $\left( \vec{R}_m^P . \vec{V}_P(t) \right)^{\alpha_P}$ is equal or close to 0 all along the sequence : $I^P(t) = I_d^p = I_{d,a}^P + I_{d,m}^P$ . The second category is defined by the constant diffuse points occluded ('CDOP') with respect to light source $m$ $\left(O_m^P = 0\right)$ : $I^P(t) = I_d^p = I_{d,a}^P$. The third category comprises of constant specular points (CSP) which includes the 3D points which are continuously submitted to specular effect by the light source $m$ ( $k_S \neq 0$, $O_m^P = 1$, $\left(\vec{R}_m^P . \vec{V}_P(t)\right)^{\alpha_P} \neq 0$ and rather close to 1).

In addition, the profiles can be further separated into two classes by separation as will be discussed presently.

The First Separation - the first separation detects 3D points which may be submitted to a specular effect by source $m$ ( $\left(\vec{R}_m^P . \vec{V}_P(t)\right)$ close to 1) from those which are not. In order to detect and classify those 3D points, the following process can be implemented as per one embodiment and the light direction vector $\vec{L}_m(P)$ is computed for each constant 3D point P. Using both the 3D position of P and S,

$$\vec{L}_m(P) = \left(\vec{S}_m - \vec{P}\right)_N$$

(N signifies that the vectors are normalized and $\vec{R}_m^P$ is then computed using equation (1))

The profile $\varepsilon_m^P(t) = \vec{R}_m^P . \vec{V}_P(t)$ is then computed along the sequence and then classified as variable or constant. A technique can also be used to distinguish the variable and constant intensity profiles as known to those skilled in the art. If the profile $\varepsilon_m^P(t)$ is variable, then it is concluded that $k_S = 0$ and the current point intensity shows a constant diffuse value. However, if the profile of $\varepsilon_m^P(t)$ is constant, then, depending on its value, the point can show diffuse and/or specular reflectance. A classification of these points relies on the constant value of $\varepsilon_m^P(t)$ such that:

    a. If $\varepsilon_m^P(t)$ is greater than a threshold $th_{INF}$, point P is classified as potentially impacted by the specular light source at frame t.
    b. Else, point P is set as not impacted by the specular light source at frame t.

The threshold $th_{INF}$ which has been chosen is equal to 0.03 which is equivalent to allowing less than a 20° angle value between $\vec{V}_P(t)$ and $\vec{R}_m^P$.

Second Separation - A second classification criterion concerns the visibility of the points with respect to the specular light source. For this purpose, several methods may be used to compute a visibility map. In one embodiment, input data consist in RGB images and depth maps and the depth maps can be used in order to generate a 3D point file which defines the scene as an unorganized point cloud.

Geometry representation - Some of the data irregularities (caused by small distance measurement errors) are very hard to remove using statistical analysis. A solution is to use a resampling algorithm, which attempts to recreate the missing parts of the surface by higher order polynomial interpolations between the surrounding data points. By performing resampling, these small errors can be corrected. Hence, the pipeline's first step is to smooth and reconstruct the missing parts of the scene. Subsequently, the previous results are used to reconstruct the surfaces of the scene. Indeed, the method works by maintaining a list of points from which the mesh can be grown ('fringe points') and extending it until all possible points are connected. It can deal with unorganized points, coming from one or multiple scans, and having multiple connected parts. It works best if the surface is locally smooth and there are smooth transitions between areas with different point densities. Triangulation is performed locally, by projecting the local neighborhood of a point along the point's normal, and connecting unconnected points. The scene can be described as a mesh.

Visibility algorithm - in one embodiment a visibility computation on the generated mesh can be performed on a particular scene. To aid understanding this scene will be called a 'Shadow Mapping' scene. The latter is performed in a two pass procedure as discussed below. A) To begin the light source is assumed to have a 'view frustum' like a camera to aid understanding. The scene is rendered from the light source's position and only depth values are saved. The latter represent the shadow map or rendered depth map. B) Subsequently the scene is rendered from a current position in which one stands. For each fragment, then one compares the current depth with the previously stored depth (one can read it from the computed shadow map) both observed from the light source position. Finally, if the current depth is greater than the shadow-map-stored depth, the fragment lies in shadow. If else, the fragment must be in the light space.

The above algorithm, in one embodiment, can be used with rendering engine or library such as OpenGL or Unity. One can implement a fragment and a vertex shader in order to verify if the mesh is visible from the light source.

Hence, one obtains a binary map that defines the occlusion map $O_m^P$. Having defined the separation tools, the 3D points in a scene that are identified as having a constant profile can be further managed as discussed further in conjunction with Figure 5.

Figure 5 is a flow chart depiction of a method according to one embodiment. For constant profiles identified in Figure 4 at step 450, provided that the 3D location of the light sources present in the scene is known, the embodiment shown in Figure 4 can be used to identify and distinguish areas with various characteristics with respect to the light sources. As shown by reference numerals 510 and 560 , points are classified according to their visibility or non-visibility respectively as with respect to the known light source locations. Moreover, the diffuse and specular reflectance components of the visible points can be estimated as shown by reference numerals 540 and 542.

These areas may include those with (or without) possible specular effect by a light source, areas occluded with respect to a light source and others as can be appreciated by those skilled in the art. The, diffuse and specular reflectance parameters are reconstructed for each point taking into account its category. In particular, a technique is proposed to identify points with the same unknown diffuse reflectance and to derive then the diffuse reflectance values as well as ambient lighting. For example, as shown in Figure 5, the visible and nonvisible areas are classified separately as shown by numerals 510 and 560 respectively. Each separate classified area is then further separated into other classifying groups and subgroups. For example, in the non-visible 560, the occluded areas and the shadow areas are further separated as shown by numerals 582 and 592. In the visible category (510), the constant the diffuse and specular areas are also further separated (steps 540 and 542).

In one embodiment, in order the classification of Figure 5 can be further provided considering the following components: 1) If the current point is visible from light source m, then it is either diffuse (no specular effect) or specular (saturation) if the profile $\varepsilon_m^P(t)$ is variable, then it is concluded that $k_S = 0$, so the observed intensity value is due to diffuse reflectance ('CDP1') (if

$$I^P(t) = I_d^p + I_s^p = I_{d,a}^P + O_m^P . I_{d,m}^P + O_m^P . I_{s,m}^P = I_{d,a}^p + O_m^P . I_{d,m}^P + k_S^P \left( \vec{R}_m^P . \vec{V}_P(t) \right)^{\alpha_P} O_m^P . i_m^S$$

, the intensity profile would be variable, that is not the case). Otherwise the profile $\varepsilon_m^P(t)$ is supposed to be constant; its value $\varepsilon_m(P)$ can be defined as the average or median value along the sequence: i) if the current point is such that $\varepsilon_m(P) > thINF,$ and if its three color component values are all above a threshold, then the point is classified as "specular" ('CSP'); ii) otherwise the point is classified as diffuse ('CDP2'). Indeed, the point exists under its diffuse state all along the sequence.

2) If the current point is not visible from source m (it is occluded with respect to light source *m),* then if the current point is such that $\varepsilon_m(P) > thINF,$ the point is classified as "occluded" ('CDOP1'). Indeed, the point could have been impacted by the specular lighting; however, the presence of an occluding object between the point and the light did not allow that interaction to happen. However, if the 3D point is such that $\varepsilon_m(P) \leq thINF,$ the point is classified as belonging to a shadowed area ('CDOP2') point.

The problem of reflectance recovery can also be addressed in one embodiment. In one embodiment, recovering the diffuse and specular components from the previously classified constant points can be accomplished. The diffuse and specular reflectance parameters for pixels which have been impacted by the specular lighting during the scan and show a variable profile can be estimated using different models as can be appreciated by those skilled in the art. However, these usually produce incomplete reflectance maps as far as the whole scene is concerned. In one instance, for example, the diffuse component is set as the profile's minimum intensity. The diffuse reflectance component results from lighting by both ambient source and source m. On the other hand, in a different instance, only ambient source lights the 'occluded' areas. Furthermore, the specular component is estimated only for the variable profiles. For points classified 'CDP2', 'CDOP1' or 'CDOP2', there is no possible conclusion about

$$I^P(t) = I_d^p + I_s^p = I_{d,a}^P + O_m^P . I_{d,m}^P + O_m^P . I_{s,m}^P = I_{d,a}^p + O_m^P . I_{d,m}^P + k_S^P \left( \vec{R}_m^P . \vec{V}_P(t) \right)^{\alpha_P} O_m^P . i_m^S$$

To be able to recover the reflectance components for these points with a constant profile is of paramount importance, especially for augmented reality applications. For instance, inserting a virtual object or removing an object in a real scene requires managing lighting and reflectance. To be able to adapt to realistic effects such as shadows, inter-reflections or specular effects, the reflectance components may be recovered through several embodiments.

**[0056]** , Points can be either categorized as visible or occluded. For points with diffuse reflectance recovery for points with diffuse constant profiles. In this embodiment, an estimate for reflectance parameter $k_d$ is provided for all points. Referring to equation (3), in the areas with constant diffuse profile, two cases can be distinguished with respect to light source m. The first has to do with occluded points with respect to m (color intensity noted $I_{dO}^{P}$)

$$(4a) \qquad I_{dO}^{p} = I_{d,a}^{P} = k_{d}^{P}.l_{a}$$

Conversely, for points that are visible with respect to source m (color intensity noted $I_{dV}^{p}$) (4b) : $I_{dV}^{p} = I_{d,a}^{P} + I_{d,m}^{P} = k_{d}^{P}.l_{a} + \left(\vec{N}_{P}.\vec{L}_{m}^{P}\right) i_{m}^{S} = k_{d}^{P}.l_{a} + k_{d}^{P}.l_{m}^{P}$. In this case, the light source m is known (color and location) and the normal vectors are known : so, component $l_{m}^{P} = (\vec{N}_{P}.\vec{L}_{m}^{P}).i_{m}^{S}$ can be computed for each point.

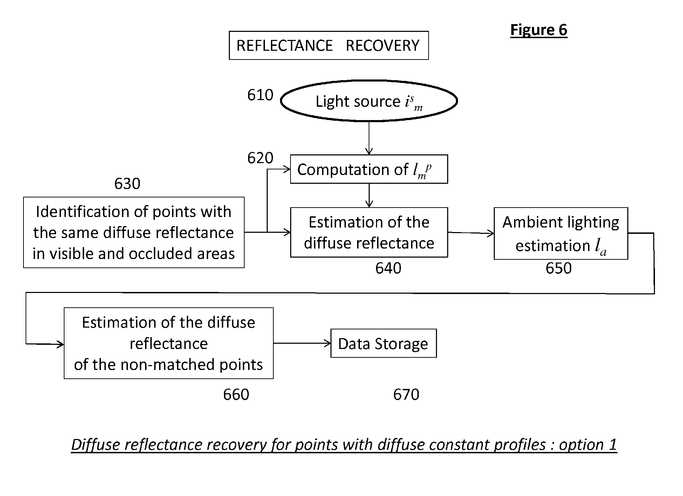

In one embodiment, as shown in the flowchart depiction of Figure 6, two points *P1* and P2 with the same (unknown) diffuse reflectance $k_{d}^{P}$, can be identified as shown at 630. One of the points (*P1*) is located in the 'occluded' area and the other (P2) located in the 'visible' area, an estimate can be provided for both $k_{d}^{P}$ and $l_a$ :

$$k_{d}^{P} = \frac{I_{dV}^{P}(P_2) - I_{dO}^{P}(P_1)}{l_{m}^{P}(P_2)} \qquad \text{and} \qquad l_{a} = \frac{I_{dO}^{P}(P_1)}{k_{d}^{P}}$$

In cases where the ambient lighting is unique for all points and reflectance is constant for several points, as far as possible there is interest to consider numerous points for these estimations. For a set of points identified as having the same value $k_{d}^{P}$, in one embodiment, a linear estimator of this value can be defined as

$$(5)$$

$$\hat{k}_{d}^{P} = \frac{\bar{I}_{dV}^{P} - \bar{I}_{dO}^{P}}{\bar{l}_{m}^{P}}$$

where $\bar{I}_{dV}^{P}$, $\bar{I}_{dO}^{P}$ and $\bar{l}_{m}^{P}$ correspond to average values computed on the 'visible' (for $\bar{I}_{dV}^{P}$ and $\bar{l}_{m}^{P}$) or 'occluded' (for $\bar{I}_{dO}^{P}$) areas of points having the same value $k_{d}^{P}$.

In order to correctly estimate $k_{d}^{P}$, it is essential to correctly identify the points located in the 'visible' and 'occluded' areas that have the same diffuse reflectance value. Ambient lighting color intensity $l_a$ (as shown at 650) can then be estimated from all points for which diffuse reflectance value has been estimated. For all these points we consider the color intensity estimate $\hat{I}_{d,a}^{P}$ corresponding to ambient lighting and derived from above equations (4) and (5) such that:

$$\hat{l}_a = \frac{\sum_P \hat{I}^P_{d,a}}{\sum_P \hat{k}^P_d} \qquad (6)$$

It may happen that some points in the scene, located either in the 'visible' or 'occluded' area, do not have corresponding points with the same diffuse reflectance value in the other type of area (respectively 'occluded' or 'visible'). For such points, it is not possible to use the previous method to estimate $k^P_d$. But once ambient lighting color intensity $\hat{l}_a$ has been estimated, it is easy to compute $\hat{k}^P_d$ for each of these points. The estimated diffuse reflectance values $\hat{k}^P_d$ can be provided as they are, for example in maps with double precision. An alternative is to computer or identify $\hat{I}^P_{d,a}$ for each point as well as the unique ambient lighting value $\hat{l}_a$. Furthermore, in some situations a unique value $\hat{l}_m$ can be selected that is common to most of the observed points. The information is then stored (step 670) for all points can be defined: $\hat{I}^P_{d,am} = \hat{k}^P_d \cdot (\hat{l}_a + \hat{l}_m)$.

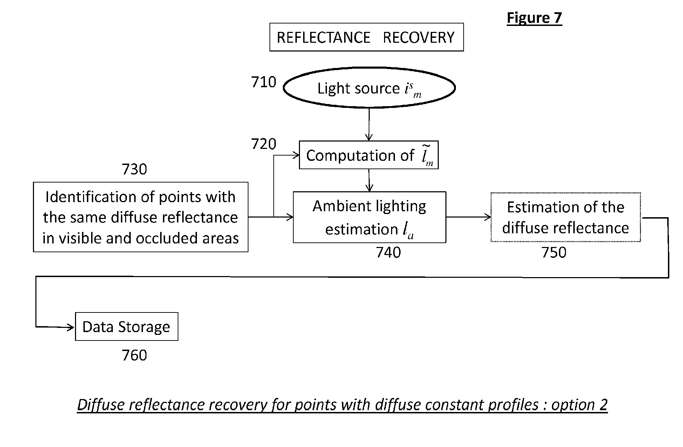

In a different embodiment, as shown in the flowchart depiction of Figure 7, the issue of diffuse reflectance recovery for points with diffuse constant profiles can be addressed. In this embodiment, $l^P_m = (\vec{N}_P \cdot \vec{L}^P_m) i^S_m$ is approximatively constant over the working area (e.g. the area is small and the light source is distant), it is possible to compute a unique estimate ($\hat{l}_m$) as shown by reference numerals 720 in resulting from averaging the values $l^P_m$ attached to the pixels of the selected area. In addition, if a match can be made for a point in the 'visible' area to each point selected in the 'occluded' area such that they have the same diffuse reflectance value $k_d$ (all the selected points can have different reflectance values, but two points of a pair must have the same value), then it is possible to compute an estimate of the ambient lighting $l_a$ as

$$(7) \qquad\qquad \hat{l}_a = \frac{\tilde{l}_m \cdot \bar{I}^P_{dO}}{\bar{I}^P_{dV} - \bar{I}^P_{dO}}$$

Where $\bar{I}^P_{dV}$ and $\bar{I}^P_{dO}$ correspond to average values computed on the set of selected 'visible' (for $\cdot \bar{I}^P_{dV}$) or 'occluded' (for $\bar{I}^P_{dO}$) points. Once ambient lighting $\hat{l}_a$ 740 has been obtained, diffuse reflectance values $k_d$ 750 can be estimated using the above discussed formulas. (The same data storage calculations as previously discussed as shown here at 760 can be applied for diffuse reflectance 750.)

In addition, the points in the visible and occluded areas that have the same (unknown) diffuse reflectance have to be identified. The identification can be made by considering the points that have a similar diffuse reflectance value $k_d$ and which are selected to compute the average values of $\bar{I}^P_{dV}$, $\bar{I}^P_{dO}$ and $\bar{l}^P_m$ .. The challenge here is identify the 'visible' and 'occluded' areas corresponding to points with the same (unknown) diffuse reflectance value $k_d$. As the diffuse reflectance $k_d$ is unknown, points can be grouped with respect to features which similarity matches diffuse reflectance similarity. This concerns matching points with a different label ('visible' and 'occluded') and possibly grouping points with the same label. These features can include but are not limited to chromaticity, hue (from the HSV color space representation), normal vectors direction and co-planarity, color intensity, 3D position distance and 2D pixel distance. Hue is a robust cue to identify the points which have the same color regardless of their location in 'visible' or 'occluded' area.

In one embodiment, chromaticity can be computed in the Modified Specular Free (MSF) image instead of the input color image as follows: the SF (Specular Free) image is obtained by subtracting from each pixel triplet RGB its minimum value in the triplet, and the MSF image is formed by adding a same scalar value (e.g. the mean of all minimum values) to each triplet on the SF image. The noise analysis indicates that the MSF image is more robust than the SF image, and therefore the former is used to compute the chromaticity for each pixel.

Similarly, color intensity similarity can be used to group points with the same label but not points with different labels as they are under different lighting. Nevertheless, in the case of candidates with different labels, a weak constraint can be that the color module of a 'visible' point must be higher than the color module of an 'occluded' point.

In one embodiment, grouping points with the same diffuse reflectance value can be accomplished by segmenting an image in areas with respect to the above features, using any clustering procedure. In the case of estimation of $\hat{I}_a$ in equation (7), clustering can be limited by first selecting a small set of distinct points (with different color intensities) in either 'visible' or 'occluded' areas, then identify and group points in both labels matching each of these selected points.

In a different embodiment, the average values $\bar{I}_{dV}^{P}$ and $\bar{I}_{dO}^{P}$ can be computed by estimating them via a weighted averaging technique as can be appreciated by those skilled in the art. For each point $P$, a weighted filtering is applied to compute its corresponding adapted values $\bar{I}_{dV}^{P}$ and $\bar{I}_{dO}^{P}$

$$(8) \qquad \bar{I}_d^{P} = \frac{\sum_q (W_{p,q} \times I_d^{q})}{\sum_q W_{p,q}}$$

The above equation can be applied for the estimation of both values $\bar{I}_{dV}^{P}$ and $\bar{I}_{dO}^{P}$. The difference is that the set of points with index q is selected either in the 'visible' or 'occluded' area. The weights $W_{p,q}$ can take into account various features which similarity matches diffuse reflectance similarity. The weights can correspond to :

$$W_{p,q} = e^{-(\sum_f \text{cos} t(f))}$$

where index *f* refers to a feature and cos*t*(f) refers to the cost of dissimilarity between features attached to points *p* and *q*. This set of features can include but are not limited to chromaticity, hue, normal vectors direction and co-planarity, color intensity, 3D position distance and 2D pixel distance.

In order to address the diffuse *reflectance recovery for points with specular constant profiles* ('CSP'), if considered point is classified as "specular" ('CSP'), interpolation of the diffuse reflectance component will be carried out from areas which diffuse component includes contribution due to light source m (areas with variable profile or with constant diffuse profile and visible from source m ('CDP')). Interpolation with weighted averaging is used to reconstruct the diffuse component. The costs that can be used may include normal vectors direction and co-planarity, 3D position distance and 2D pixel distance. Moreover, in particular if lighting is close to white, the color of the points can be put down to diffuse reflectance. So, hue and/or chromaticity can contribute to the similarity evaluated in equation (8).

For instances that include the specular reflectance recovery, the specular reflectance component is reconstructed as follows. 1) If the considered point has a diffuse constant profile {CDP2,CDOP1,CDOP2}, then then the reconstruction of the specular reflectance parameters $k_s^{P}$ and $\alpha_p$ from the neighborhood, starts from the specular reflectance available in the areas with a variable profile or where $k_s^{P} = 0$ ('CDP1' points). For that purpose, an adapted weighted filtering takes into account some criteria in the weights that may include but is not limited to chromaticity, hue, normal vectors direction and co-planarity, color intensity, 3D position distance and 2D pixel distance. However, if the considered point is classified as "specular" ('CSP'), then the specular component can be derived once diffuse reflectance has been recovered for example using the method described. . The specular reflectance parameters $k_s^{P}$ and $\alpha_p$ can also be interpolated in the same way as above, in particular if the point color is saturated.

**Claims**

1. A method for three dimensional presentation of two dimensional images in a video sequence having a plurality of frames, comprising:

    identifying a plurality of points (100) to be presented in said three dimensional images;
    performing a color and depth sequence analysis (410) for each of said points;

generating profiles (420) for each of said points based on said analysis;
classifying said profiles as variable profiles or constant profiles (430);
calculating a surface reflectance (460) for each of said points having a constant profile (430); and
modifying (470) said two dimensional images to present as three dimensional images for points having a constant profile, wherein said images maintain uniform color and appearance between adjacent frames along said video sequence.

2. The method of claim 1, wherein at least one of said plurality of points (100) is created virtually and associated with one said image.

3. The method of claim 2, wherein said constant and variable profiles (430) are created based on estimates of diffuse and specular reflectance component of said points (100).

4. The method of claim 3, wherein said variable and constant profile (430) determination also includes a classification of said points based on their pixels intensity.

5. The method of claim 3, wherein said points (100) having said constant profile (430) are further divided based on their position in regard to position of a light source (210)associated with each frame along said sequence.

6. The method of claim 5, wherein said two dimensional images are modified by estimating at least location of a light source (210) and identifying if said light source will generate specular effects associated with each of said points having said constant profile.

7. The method of claim 6, wherein each of said points (100) are further divided as visible (510), occluded (560) or out of field (560) for each frame along said sequence.

8. The method of claim 7, wherein a color profile is generated for each pixel for each point (100) for each said frame along said sequence.

9. The method of claim 7, wherein a color profile is generated for each pixel for each of said visible points (510) for each said frame along said sequence.

10. The method of claim 9, wherein said color profile is generated by creating a curve that provides each frame (302) along said sequence from different viewpoints.

11. The method of claim 10, wherein a plurality of curves can be created and each curve is associated with a different pixel.

12. The method of claim 10, wherein said sum is weighted according to color and luminance characteristics.

13. A system for three dimensional presentation of two dimensional images in a video sequence having a plurality of frames, comprising:

a camera (360) for generating a video sequence having a plurality of frames along said sequence;
a sensor (350) associated with said camera to capture each of said frames along said sequence from a plurality of angles;
a processor (370) in communication with said camera and said sensor and configured to identify a plurality of points associated with each frame; said points to be presented in three dimensions;
said processor (370) performing a color and depth sequence analysis for each of said points and generating profiles for each of said points based on said analysis; wherein at least one of said points is created virtually;
said processor (370) classifying said profiles as variable profiles or constant profiles;
calculating a surface reflectance for each of said points having a constant profile; and
said processor (370) modifying said two dimensional images to present as three dimensional images for points having a constant profile such that said images have uniform color and appearance between adjacent frames in said video sequence.

14. The system of claim 13, wherein geometry of each point in said frame is estimated by said processor (370); said processor (370) also analyzing color and generating a depth map based on information obtained by said camera and said sensor for each said frame along said sequence.

**15.** A system for three dimensional presentation of two dimensional images in a video sequence having a plurality of frames, comprising:

means for generating a video sequence (360) having a plurality of frames wherein said frames along said sequence include a plurality of viewpoints from a plurality of angles;
means for identifying a plurality of points (100) associated with each frame wherein said points are associated with images to be presented in three dimensions;
means for performing a color and depth sequence analysis (410) for each of said points;
means for generating profiles (420) for each of said points based on said analysis;
means for classifying (430) said profiles as variable profiles or constant profiles and
means for calculating (460) a surface reflectance for each of said points having a constant profile; and
means for modifying (470) said two dimensional images to present as three dimensional images for points having a constant profile, wherein said images have uniform color and appearance between adjacent frames in along video sequence.

**Figure 1** – Specular reflection

**Figure 2** – Specular reflection in 3D

302  310  312  320  322

330  332

340

305

350

360

370

300

**Figure 3**

## Figure 4

410
420
430
440

RGB-D sequence

3D point intensity profiles

Constant/variable profiles classification

3D light source position

Classification of the points with constant profile

Reflectance estimation of the points with constant profile

*Diffuse, Specular*

450

460

470

Modification etc.

## Figure 5

**Figure 6**

REFLECTANCE RECOVERY

610 Light source $i^s_m$

620 Computation of $l^p_m$

630 Identification of points with the same diffuse reflectance in visible and occluded areas

Estimation of the diffuse reflectance
640

Ambient lighting estimation $l_a$
650

Estimation of the diffuse reflectance of the non-matched points
660

Data Storage
670

*Diffuse reflectance recovery for points with diffuse constant profiles : option 1*

**Figure 7**

REFLECTANCE   RECOVERY

710 — $\left(\text{Light source } i^s_m\right)$

720 — Computation of $\tilde{l}_m$

730 — Identification of points with the same diffuse reflectance in visible and occluded areas

740 — Ambient lighting estimation $l_a$

750 — Estimation of the diffuse reflectance

760 — Data Storage

*Diffuse reflectance recovery for points with diffuse constant profiles : option 2*

Europäisches
Patentamt

European
Patent Office

Office européen
des brevets

# EUROPEAN SEARCH REPORT

Application Number

EP 15 30 6454

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KYONG JOON LEE ET AL: "Estimation of Intrinsic Image Sequences from Image+Depth Video",<br>7 October 2012 (2012-10-07), COMPUTER VISION ECCV 2012, SPRINGER BERLIN HEIDELBERG, BERLIN, HEIDELBERG, PAGE(S) 327 - 340, XP047019092,<br>ISBN: 978-3-642-33782-6 | 1,13-15 | INV.<br>G06T15/50<br>G06T7/00 |
| Y | * abstract *<br>* sections 1, 1.2, , 3, 4 *<br>* figures 5, 6 * | 2-12 | |
| Y | US 2008/218516 A1 (PFISTER HANSPETER [US] ET AL) 11 September 2008 (2008-09-11) | 2-12 | |
| A | * paragraphs [0001], [0003], [0007], [0009], [0013], [0015], [0017], [0018], [0021], [0033] - [0038], [0055] - [0057] *<br>* figure 3 *<br>* paragraphs [0062] - [0064], [0092] * | 1,13-15 | |
| A | WO 2008/063167 A1 (THOMSON LICENSING [FR]; BENITEZ ANA B [US]; ZHANG DONG-QING [US]; FANC) 29 May 2008 (2008-05-29)<br>* page 1, line 4 - page 2, line 13 *<br>* page 9, line 13 - page 12, line 18 *<br>* page 14, line 13 - page 16, line 11 * | 1-15 | TECHNICAL FIELDS SEARCHED (IPC)<br><br>G06T |

The present search report has been drawn up for all claims

| Place of search | Date of completion of the search | Examiner |
|---|---|---|
| Berlin | 23 February 2016 | Kröner, Sabine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding document

EPO FORM 1503 03.82 (P04C01)

# EP 3 144 898 A1

## ANNEX TO THE EUROPEAN SEARCH REPORT
## ON EUROPEAN PATENT APPLICATION NO.

EP 15 30 6454

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2016

| Patent document cited in search report | Publication date | Patent family member(s) | Publication date |
|---|---|---|---|
| US 2008218516 A1 | 11-09-2008 | NONE | |
| WO 2008063167 A1 | 29-05-2008 | CN 101542537 A | 23-09-2009 |
| | | EP 2089852 A1 | 19-08-2009 |
| | | JP 4945642 B2 | 06-06-2012 |
| | | JP 2010510571 A | 02-04-2010 |
| | | KR 20090086964 A | 14-08-2009 |
| | | US 2010290697 A1 | 18-11-2010 |
| | | WO 2008063167 A1 | 29-05-2008 |

EPO FORM P0459

For more details about this annex : see Official Journal of the European Patent Office, No. 12/82